# EUROPEAN PATENT APPLICATION

(11) **EP 4 428 409 A1**
(43) Date of publication of application: **11.09.2024**
(21) Application number: 23461532.6
(22) Date of filing: 10.03.2023
(51) Int. Cl.: F16K 5/06, F16K 49/00

(54) **VALVE HEATER**

(71) Applicant: B/E Aerospace, Inc., Winston-Salem, NC 27105 (US)
(72) Inventor: KROCZEK, Piotr Jacek, 51-317 Wroclaw (PL); TARNOWSKI, Adrian, 51-317 Wroclaw (PL); SWIRNIAK, Pawel, 51-317 Wroclaw (PL)
(74) Representative: Dehns

(57) **Abstract**

A valve heater comprising a sheet (400, 405) into which is integrated one or more heating elements (410), the sheet being shaped to be located within a valve housing. The valve may be a ball valve comprising a valve housing (200) defining a flow conduit between an inlet (230) and an outlet (240) and a ball element (250) rotatably positioned in the housing, the ball element defining a channel (210) therethrough to form a fluid flow path through the valve in a valve open position when the channel is aligned with the flow conduit, and a valve heater located on an inner surface of the ball element that defines the channel.

## Description

### TECHNICAL FIELD

The present disclosure is concerned with providing heating for valves, in particular for ball valves such as, but not exclusively, ball valves used as a drain valve.

### BACKGROUND

Valves are used in many applications for the controlling the flow of matter. Valves of many types are available to allow/prevent or regulate the flow of matter from one point to another. Valves can be electric, mechanical, hydraulic or combinations thereof and can have many different structures but typically comprise a moveable part within a flow path to vary the flow of matter in the flow path. In some circumstances, valves may be located in environments where they might be exposed to extreme temperatures which, if not addressed, can cause ice to form in or around the valve which can restrict or prevent movement of the moveable part of the valve. This can prevent reliable operation of the valve and/or cause damage to the valve parts.

One example of a use of a valve subject to very cold temperatures is a drain valve used for draining matter from a waste tank on an aircraft or other vehicle operating in a cold environment. Matter e.g. waste water and matter from a lavatory system is collected in a waste tank which needs to be emptied. The emptying is typically done by opening a drain valve to expel the matter from the tank to the environment or to another collector. The drain valve is typically on the exterior of the aircraft or vehicle and so exposed to air which can, in certain circumstances, be well below 0 degrees. Water or fluid in or around the valve can, therefore, freeze and prevent or restrict movement of the valve.

In a particular example of a drain valve, a ball valve is used. A ball valve includes a flow conduit having an inlet port to receive the fluid to be drained, and an outlet port to expel the fluid. A ball member having a channel formed therethrough is rotatably mounted in the flow conduit between the inlet and the outlet. To actuate the valve, the ball is rotated (this may be manually, e.g. via a handle, or automatically) relative to the flow conduit. In the open state, the ball is rotated such that the channel is aligned with the conduit and fluid/matter can flow from the inlet to the outlet. To close the valve, the ball is rotated so that the channel is not aligned with the flow conduit and so the ball blocks flow from the inlet to the outlet. Such ball valves are well known. Other types of valve may also be used but they will typically have a moveable member moveable relative to the flow path between a valve open position and a valve closed position. If ice forms between the moveable member and the flow conduit or housing, the moveable member cannot move as required.

Heaters are, therefore, commonly provided for valves where there is a risk of freezing. The type of heater that is commonly used is a soft silicone body in which electrically conductive wires are arranged that generate heat when current is applied to them. The silicone body is usually mounted around the valve or adjacent to the valve. Because such heaters are exposed, they can suffer damage from e.g. impact or environmental factors e.g. during flight of an aircraft or during service or operation of the valve. Furthermore, because the heaters are necessarily located at a distance from the actual location where ice may be formed/may cause the greatest problems - e.g. between the moveable part and the valve housing - there will be some heat loss and so the heater will need to be larger or require more power to heat those locations as much as required. Such heaters will also radiate heat in other directions where it is not needed which also results in poor heating efficiency.

There is, therefore, a need for an improved valve heater that can address these deficiencies.

### SUMMARY

The present disclosure provides a valve heater comprising a sheet into which is integrated one or more heating elements, the sheet being shaped to be located within a valve housing.

The disclosure also provides a ball valve comprising a valve housing defining a flow conduit between an inlet and an outlet and a ball element rotatably positioned in the housing, the ball element defining a channel therethrough to form a fluid flow path through the valve in a valve open position when the channel is aligned with the flow conduit, and a valve heater as claimed in any preceding claim located on an inner surface of the ball element that defines the channel.

Also provided is a method of assembling a ball valve, as defined in claim 8 and alternative methods of forming a ball valve as defined by claims 11 and 12.

### BRIEF DESCRIPTION

Examples of a valve heater and a valve according to the disclosure will now be described with reference to the drawings. These shown examples only, and variations are possible within the scope of the claims.

The valve heater and valve are described in the context of a ball valve for a drain valve e.g. for the drain valve of a waste tank on an aircraft. It should be noted, however, that the heater and valve of this disclosure may be for different valve types and uses.
Figure 1 shows an example of a waste tank having a drain valve with a conventional heater.
Figure 2 shows a cross section of a ball valve for the purposes of explaining the problem.
Figure 3 is a cross section of a ball valve incorporating a heater according to this disclosure.
Figure 4 is a detail of the arrangement of Fig. 3.
Figure 5 is an exploded view of a valve with a heater according to this disclosure.
Figures 6A and 6B show examples for manufacturing a valve with a heater according to examples of the disclosure.
Figure 7 illustrates the advantages of the heater of this disclosure as compared to Figure 2.

### DETAILED DESCRIPTION

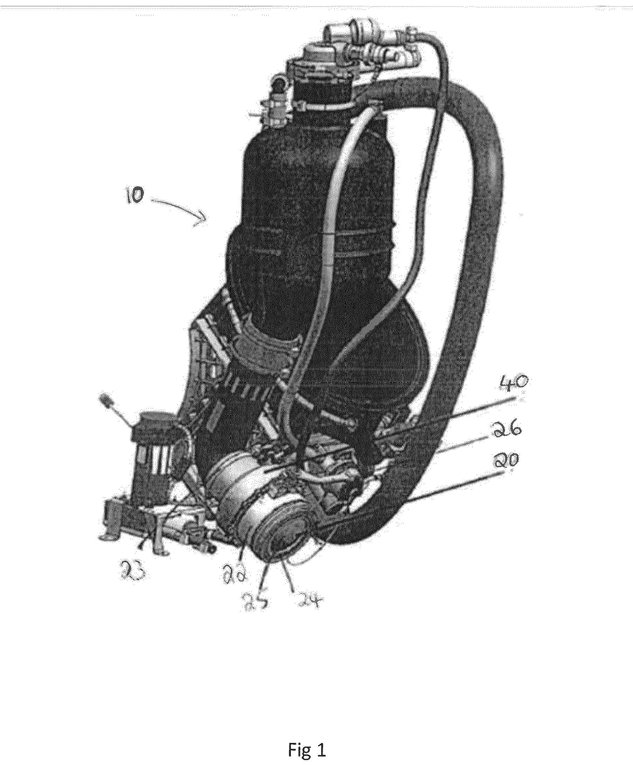

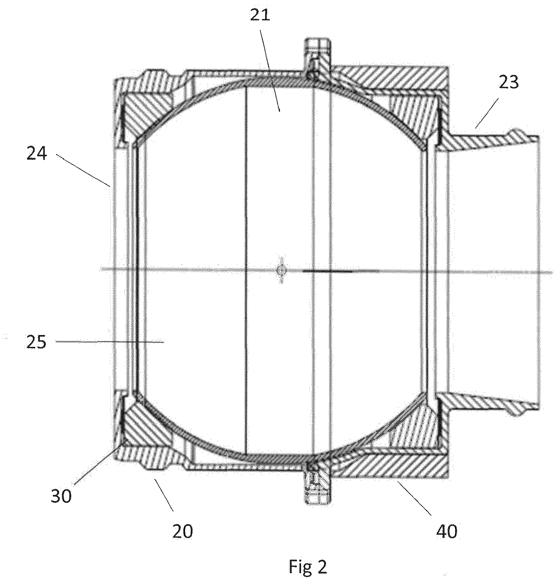

Figure 1 shows a typical waste tank of the type used in aircraft or the like for the purposes of explaining the problem to be solved by the heater and valve of this disclosure. The waste tank 10, which is a well-known apparatus, collects waste such as fluid or other matter e.g. from a lavatory system. This will not be described further except to say that when the tank needs to be emptied, a drain valve 20 is opened to allow the matter to drain from the tank to the outside. In the example shown, the valve 20 is a ball valve having a valve housing 22 defining a flow conduit between an inlet end 23, connected to the waste tank 10, and an outlet end 24. The valve closure element is a ball 25 having a channel 21 formed therethrough. The ball 25 is rotatable relative to the housing 22 (here manually by means of a handle 26) such that the valve is open when the channel aligns with the flow conduit and is closed when the channel does not align with the flow conduit. Because the valve is typically mounted in an area exposed to the environment e.g. on the aircraft body, when exposed to very cold temperatures water inside the valve or around the ball can freeze. Figure 2 shows a cross section of such a ball valve with the ball 25 rotatably mounted in the valve housing between the inlet 23 and the outlet 24. Seals (usually rubber seals) 30 are provided between the ball and the housing. If, however, water or other fluid freezes in areas between the ball and the housing e.g. at the area of contact (shown by the circles in Fig. 2) between the ball and the seals 30, rotation of the ball is restricted or prevented.

Typically, a heater 40 is provided adjacent the valve to prevent such freezing. This commonly is in the form of a silicone block or body inside which electrical heating wires are positioned or embedded. The silicone is a relatively soft material.

This heater, due to its exposed location, can be damaged during flight or installation or when operating or servicing the drain valve 20. Furthermore, the heater cannot provide optimal heating, at optimal efficiency, for all vulnerable parts of the valve. As can be seen in Figs. 1 and 2, the heater 40 is located to one side of the ball and is spaced from the ball/seal contact surface on one side and spaced even further from the contact surfaces on the other side of the valve. Furthermore, the heater will also be heating the environment on its side away from the ball which adversely affects the efficiency of the heater and means that larger heaters than absolutely necessary for the required heating effect will be needed to take into account the heat losses.

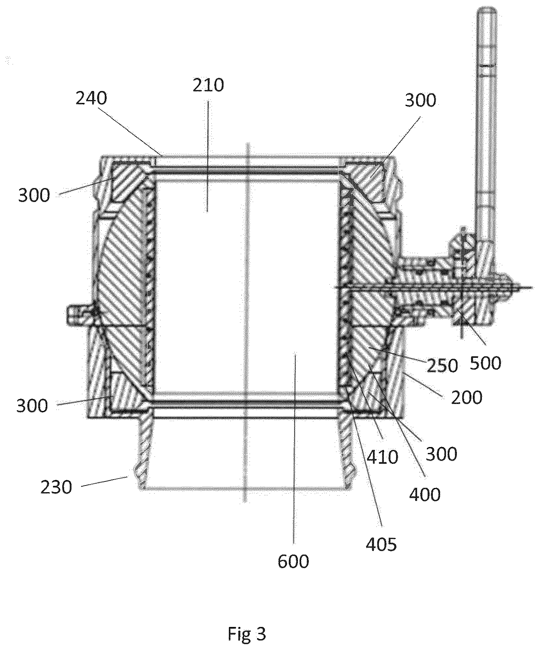

These problems are addressed by a heater according to this disclosure which will now be described, by way of example only, with reference to Figs. 3 to 7.

According to the disclosure, a heater is provided for a valve which is configured to be integrated inside the movable valve element rather than external to the movable valve element. The heater is provided in the form of a sheet or sleeve in which a heater element is integrated, the sheet or sleeve being configured to be mounted at the interface between the movable element of the valve and the flow channel. For a ball valve, the sleeve is configured to be mounted within the flow channel through the ball. For other types of valve, the sheet or sleeve can be mounted between the movable element and the fluid channel that is formed by the movable element being in the open position.

The fundamental feature of the invention is that the heater element is integrated into a sheet or sleeve that is configured to be mounted inside the valve, so as to remove the heater from exposure to the environment and from risk of impact damage and also to ensure that the heat generated by the heater is focused on the regions where it is required and so minimise heat losses and improve efficiency.

Further advantages are provided by the heater being an induction heater as will be described further below.

Yet further advantages are provided if the movable valve element and the heater are integrally formed by additive manufacture (AM).

Figure 3 shows an example of a ball valve incorporating a heater according to the disclosure. As described above, and as is standard for a ball valve, the valve comprises a ball element 250 rotatably mounted within a fluid conduit through a valve housing 200 from a fluid inlet 230 to a fluid outlet 240. A channel 210 is formed through the ball element to allow flow from the inlet to the outlet when the valve is open and the channel 210 is aligned with the fluid conduit. The operation of the ball valve is well-known and has already been described above and so will not be described again here. Seals 300 are provided between the ball element and the valve housing 200.

The heater according to the disclosure is in the form of a sheet having a heating element integrated therein and the sheet is located inside the valve at the interface between the movable element and the flow path through the valve. In the case of a ball valve, the sheet is formed as a sleeve 400 configured to fit in the flow channel 210 i.e. around the inner surface of the ball element that defines that channel 210. In other types of valve, the sheet might be a planar or flat sheet to be mounted to an inner surface of a planar movable element. The sheet can be attached directly or indirectly to the inner surface of the movable element. The sheet/sleeve may comprise a silicone material 405 of the type that is typically used to house heating element. One or more heating elements 410 are integrated or embedded into the sheet/sleeve material. Means 500 are provided through the movable element/ball element 250 to provide electric power to the heating element(s) 410 to cause the heating element(s) to generate heat. The heat generated by the heater inside the valve is directed to sites within the valve and so is focussed on those areas that are more in need of that heat in cold environments e.g. the interface between the ball element 250 and the seals 300.

In an example, a protective sheet or sleeve 600 may be mounted over the inner surface of the sheet or sleeve to protect it from the fluid passing through the conduit when the valve is open.

Whilst the heater of the disclosure provides advantages by being located inside the valve, and the heating elements could be the sort of wires typically used for other heaters such as described with reference to Figs. 1 and 2, the heater of this disclosure may be further improved by using an inductive heater inside the valve. In this case, the heater comprises an outer sheet or sleeve 400 of ferromagnetic material mounted around a sheet or sleeve 405 of silicone material in which an induction coil heating element 410 is embedded. Again, a protective sleeve 600 maybe provided as an innermost sleeve.

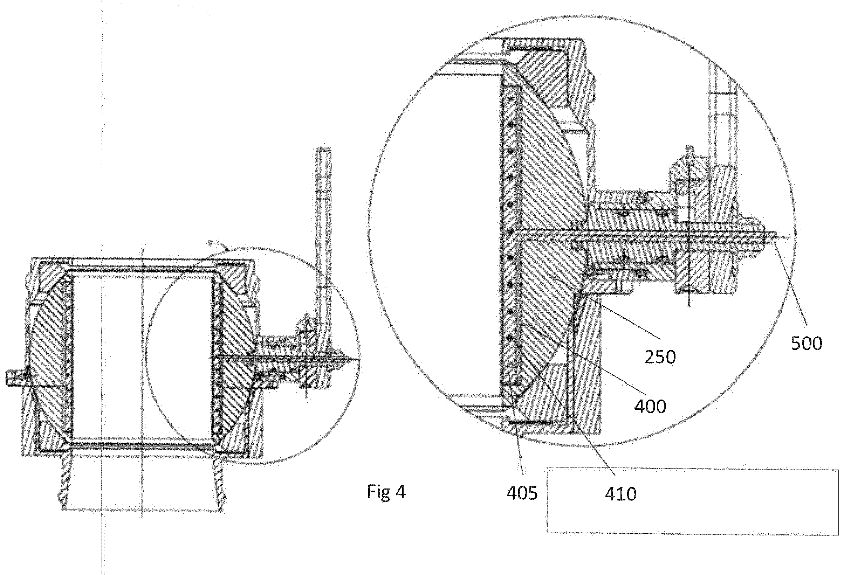

The combination of the ferromagnetic sleeve 400 and the induction coil heating element 405 generates heat by induction as explained with reference to Fig. 4. The induction coil heating element 405 is preferably a copper coil or other conductive material coil. Electric current is provided to the heater coil from outside the valve by means 500 e.g. via an electric connector connected to a power supply (not shown). This creates a magnetic field around the heater coil which, according to Faraday's Law, heats the ferromagnetic sleeve 400. This, in turn, heats the valve movable part - here the ball element 250.

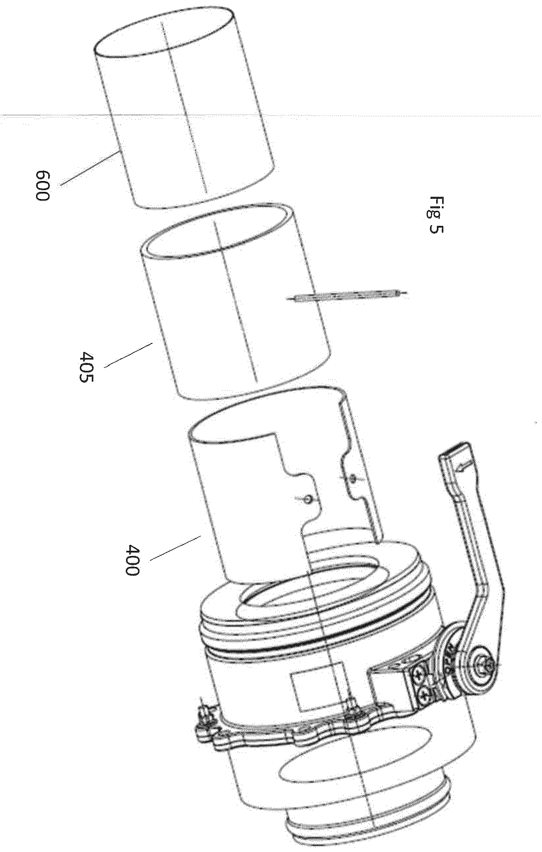

One way of assembling the heater for a ball valve is shown in Fig. 5. The structure of the ball valve components is well-known and will not be described again. To assemble the heater inside the valve, the sleeve can be inserted from the inlet or outlet when the valve is in the open position. In the case of the induction heater, the ferrormagnetic sleeve would be inserted first. This would typically be a flexible sheet which could be rolled to a size smaller than the channel into which it is to be assembled and will then unfurl to the size of the channel once in place. The induction heater in silicone housing sleeve is also flexible and can then be inserted into the ball element. Finally, where used, the protective sleeve can be inserted into the silicone housing sleeve.

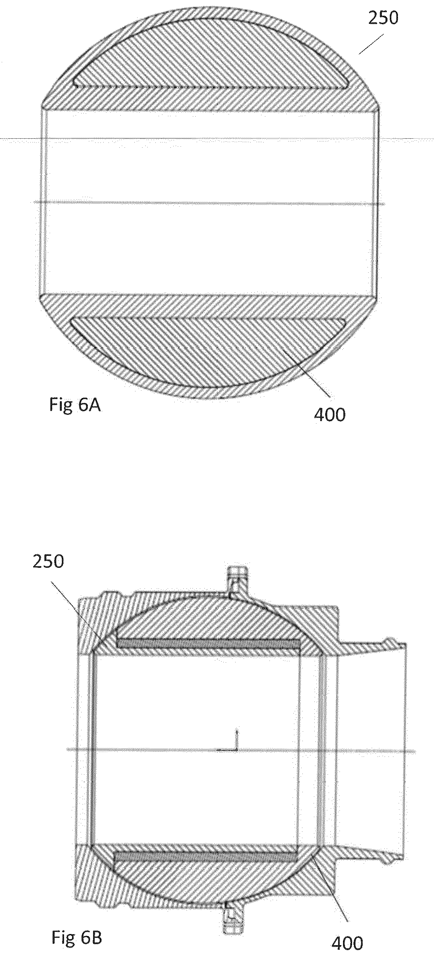

Alternatively, the valve movable element e.g. the ball 250' can be integrally formed with the heater, or at least a part of the heater e.g. the ferromagnetic sleeve 400', using additive manufacture (AM) as represented in Fig. 6A. Such integral manufacture provides for ideal heat transfer.

In an alternative, the ball element 250" could be made in two halves with the ferromagnetic sleeve 400" between the two halves.

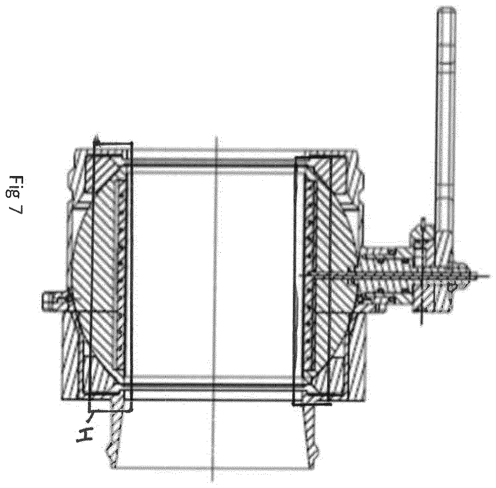

The improvement is heat transmission using a heater as in the present disclosure compared to an external heater as typically used can be seen from a comparison of Fig. 7 with Fig. 2. As already mentioned, with the conventional heater, the interface between the ball element and the seals is not uniformly and efficiently heated by the external heater 40. In contrast, the area heated by the heater of this disclosure, shown by the rectangles H in Fig. 7, there is much improved heat transmission between the heater and the valve parts where heat is most needed - i.e. the interface between the ball element/movable element and the seals and also at the main flow path.

The solution of this disclosure therefore provides a valve heater that is simple and lightweight and easy to assemble, is protected against external sources of damage, provides improved heat transfer to the parts of the valve that need it, and reduces the overall envelope of the valve assembly.

## Claims

1. A valve heater comprising a sheet (400, 405) into which is integrated one or more heating elements (410), the sheet being shaped to be located within a valve housing.

2. A valve heater according to claim 1, further comprising an electrical connector (500) for applying current to the one or more heating elements.

3. A valve heater according to claim 1 or 2, wherein the sheet comprises a layer of silicone (405) within which the one or more heating elements (410) are embedded.

4. A valve heater according to claim 3, wherein the one or more heating elements are conductive coils and wherein the sheet further comprises a ferromagnetic layer (400) provided around the layer of silicone.

5. A valve heater according to any preceding claim, further comprising a protective layer (600) between the sheet and a fluid flow path between the valve when the heater is located in the valve, in use.

6. A valve heater according to any preceding claim, wherein the sheet is in the form of a sleeve.

7. A ball valve comprising a valve housing (200) defining a flow conduit between an inlet (230) and an outlet (240) and a ball element (250) rotatably positioned in the housing, the ball element defining a channel (210) therethrough to form a fluid flow path through the valve in a valve open position when the channel is aligned with the flow conduit, and a valve heater as claimed in any preceding claim located on an inner surface of the ball element that defines the channel.

8. A method of assembling a ball valve as claimed in claim 7, comprising inserting the valve heater into the channel when the valve is in the open position.

9. A method according to claim 8 wherein the valve heater is as defined in claim 4, the method comprising inserting the ferromagnetic sheet into the channel, then inserting the layer of silicone into the channel radially inwards of the ferromagnetic sheet.

10. A method according to claim 9, further comprising inserting a protective sleeve into the channel after insertion of the layer of silicone.

11. A method of forming a ball valve as claimed in claim 7 comprising additively manufacturing the ball element and the valve heater as a single part.

12. A method of forming a ball valve as claimed in claim 7, comprising forming the ball element as two halves and fitting the halves around the sheet, the sheet being in the form of a sleeve.
